# EUROPEAN PATENT SPECIFICATION

(11) **EP 2 372 650 B1**
(45) Date of publication and mention of the grant of the patent: **05.04.2017**
(21) Application number: 11156612.1
(22) Date of filing: 02.03.2011
(51) Int. Cl.: G06T 7/00, G01N 21/956

(54) **Method for mura effect level measurement of a display**
Verfahren zur Messung der Höhe des Mura-Effects eines Displays
Procédé pour la mesure du niveau de l'effet mura d'un affichage

(30) Priority: 04.03.2010 TR 201001661
(43) Date of publication of application: 05.10.2011
(73) Proprietor: Vestel Elektronik Sanayi ve Ticaret A.S., 45030 Manisa (TR)
(72) Inventor: Gucbilmez, Alp, 45030 Manisa (TR); Karsli, Kivanc, 45030 Manisa (TR)
(74) Representative: Cayli, Hülya

(56) References cited:
- EP-A1- 1 225 557
- US-A1- 2007 126 975
- PRATT W K ET AL: "P-4: Defect Detection in Reflective Liquid-Crystal Microdisplays", 1999 SID INTERNATIONAL SYMPOSIUM - MAY 18-20, 1999, SAN JOSE, CALIFORNIA, 18 May 1999 (1999-05-18), XP007009023,
- HSIANG-HAN HSU AND YU-PING LAN ET AL: "P-84: Luminance and Color Measurement for LED Backlights with a Hyperspectral Camera", SID 2008, 2008 SID INTERNATIONAL SYMPOSIUM, SOCIETY FOR INFORMATION DISPLAY, LOS ANGELES, USA, vol. XXXIX, 18 May 2008 (2008-05-18), pages 1503-1505, XP007016976, ISSN: 0008-966X
- Seung-Il Baek ET AL: "Inspection of defect on LCD panel using polynomial approximation", TENCON 2004. 2004 IEEE Region 10 Conference Chiang Mai, Thailand Nov. 21-24, 2004, vol. Vol. 1, 21 November 2004 (2004-11-21) , pages 235-238, XP055256862, DOI: 10.1109/TENCON.2004.1414400 ISBN: 978-0-7803-8560-3

## Description

### Technical Field

The invention relates to a method for Mura effect level measurement of a display.

### Prior Art

Displays have a problem known as "Mura effect". This problem manifests itself as a change in luminance and/or color level in different points of the panel. It is caused by the non-homogeneous backlight illumination of the panel, and is more visible in full color patterns (i.e. full white, full blue etc...). Various kinds of defects in display components can cause the Mura effect.

So far the Mura effect has only been observed with naked eye, and the evaluation whether or not the degree of Mura effect was acceptable has been subjective, and in no way scientific. The results in the decisions on the acceptability of the degree of Mura effect may change from individual to individual and may also depend on the perception of the observer.

Therefore there is a need for developing an objective method for the evaluation of the degree of Mura effect.

Document EP1225557A1 discloses a display without non-uniformity in illumination with respect to both initial characteristics and change over time by measuring anode current of an FED and creating a luminance correction memory. In addition, by illuminating arbitrary pixels during video idle periods, capturing the luminance information from the pixels, and renewing a correction memory based on this luminance information, correction for change over time is possible without interrupting video display.

Publication "INSPECTION OF DEFECT ON LCD PANEL USING POLYNOMINAL APPROXIMATION" by Seung-II Baek et al. School of Electrical Engineering and Computer Science Kyungpook National University discloses an efficient automate inspection algorithm using polynominal approximation and optimal thresholding technique. The experimental result shows that the proposed system can have enough performance for substitution of human inspectors.

In patent application KR 20080060041, a Mura test method of an LCD is described. The method described in KR 20080060041, is provided to deal with Mura through a circuit by grasping a location and a level of the Mura by using an auto probe, analyze a luminance difference easily by using a high resolution color CCD (Charge Coupled Device) camera and to reduce an inspection time. Said method comprises the following steps; inputting a test sample into an auto vision test machine; detecting a luminance difference on the test sample; firstly determining good or bad of the test sample according to the detected luminance difference; measuring a spectral wavelength of a test sample passing the first determination; and secondarily determining good or bad of the test sample according to the measured spectral wavelength.

### Brief Description of the Invention

The subject of the present invention is a method of measuring the luminance level in a display for Mura effect level measurement as indicated in claim 1.
In particular, the method according to the invention comprises the steps of:
- the display is lit and left to be warmed,
- after passing a sufficient time as indicated in the display specs the luminance of the display is measured point by point,

- determining a required number of points to evaluate Mura effect of said display on parallel vertical lines on the display, and in a steady state condition of luminance, wherein the vertical lines are selected at L/4 horizontal distance from each other, wherein said number of points depends on the size of the display and a type of Mura effect to be evaluated,
- comparing the measured luminance with nominal values to obtain a standard deviation from the nominal values.

The step of comparing the measured luminance with nominal values to obtain a standard deviation from the nominal values is further specified in claim 2:

### Object of the Invention

The object of the present invention is to provide a method for Mura effect level measurement of a display which allows an objective evaluation of the degree of the Mura effect, without leaving room to subjective criteria.

Another object of the present invention is to evaluate Mura effect level of the display by comparing luminance values.

Another object of the present invention is to calculate the expected right luminance value of the display by using numerical methods such as polynomial fitting of the data and standard deviation of the data by using software.

### Brief Description of the Drawings

Figure 1: shows the steps of Mura level evaluation process
Figure 2: shows an example of selection of points on the CCFL (Cold cathode fluorescent lamps) based LC display for the lamp MURA measurement of luminance levels
Figure 3: shows the alignment from which a measurement will be taken in order to measure Mura that might be encountered in LED panels.
Figure 4: shows an example of selection of points on the LC display for the egg MURA measurement of luminance levels

The reference numbers as used in figures may possess the following meanings.
Measurement of luminance values of a display point by point (1)
Processing measured luminance values via numerical methods by using software (2)
Standard deviation calculation of compared luminance values (3)
Evaluation of Mura level (4)
Blue colour (21)
Cyan colour (22)
Green colour (23)

### Detailed Description of the Invention

The method according to the invention provides for the following steps:
The display, also defined as panel or with the acronym BLU (Backlight Unit), is lit and left to be warmed.

After passing a sufficient time (e.g. 30 min for a standard 32" BLU (Backlight Unit), as stated in the panel specs) the luminance of the panel/BLU is measured point by point.

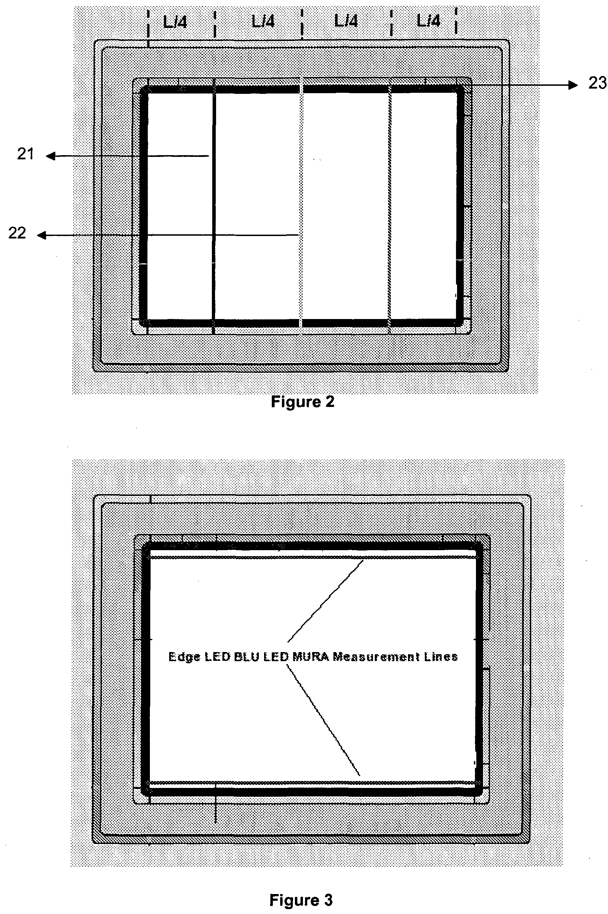

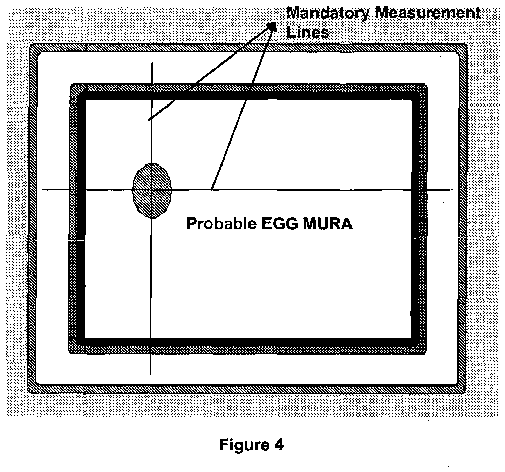

Depending on the size of the display and the type of Mura effect to be evaluated, number of points is calculated. For example a 32" lamp Mura requires approximately 60 points perpendicularly aligned to the lamps, as shown in the example of figure 2, where vertical lines are selected at L/4 horizontal distance from each other. Namely, enough points are measured from each line above (blue (21), cyan (22) and green (23)), depending on size and resolution needed for the panel. The number of points is calculated in the manner that the difference between a point and its neighbours will be small enough so that the luminance deviation can be noticed in virtual medium (at least triple the number of CCFL's) which is shown in Figure 4.

Then the collected optical data are processed via numerical methods such as polynomial fitting of the data or standard deviation of the data by using software (C, C++, Matlab etc...). The code written in one of these softwares gives us a new set of data expressing the expected right values of the luminance cross section.

The difference is then calculated to obtain the standard deviation of the cross-section values of the display from the expected right values.

The number resulting from this calculation gives an objective quantity on which different displays can be compared and Mura effect levels of different displays can be evaluated.

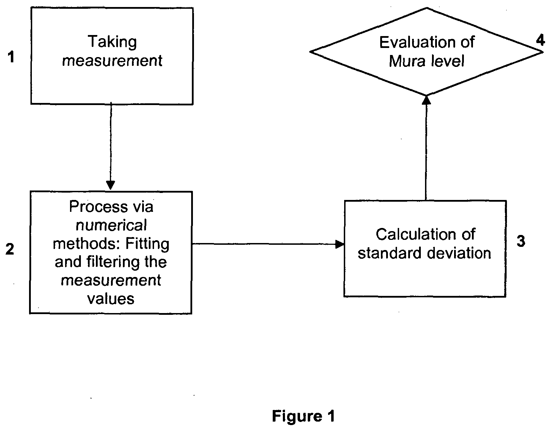

Therefore the invention provides a method for Mura effect level evaluation by measuring the luminance level in a display, comprising the steps of which is given in figure 1:
measuring the luminance of the display point by point (1),
calculating the required number of points to evaluate Mura effect of said display according to size and resolution of the display on parallel vertical lines on the display, and in a steady state condition of luminance (2),
comparing the measured luminance values of calculated number of points with nominal values to obtain a standard deviation from the nominal value (3).

The step of comparing the measured luminance with nominal values to obtain a standard deviation from the nominal value may comprise the following:
the measured luminance values of the calculated number of points are introduced into a numerical code which returns a new set of data, by fitting the points to a 4th degree polynomial by filtering/smoothing the data;
the new data are a convergence of the previous data to an ideal case;
the difference is then calculated and used to find the standard deviation;
the standard deviation is then processed again to invoke both the maximal luminance value and the maximal deviation.

In figure 3 an embodiment of the present invention is given. Figure 3 shows the alignment from which a measurement will be taken in order to measure Mura that might be encountered in LED panels. By given Mura measurement lines, continuity and uniformity of measured luminance values are checked in order to evaluate Mura effect level of said LCD panel.

## Claims

1. A method for Mura effect level evaluation by measuring the luminance level in a display, comprising the steps of: - the display is lit and left to be warmed,
- after passing a sufficient time as indicated in the display specs the luminance of the display is measured point by point,
- determining a required number of points to evaluate Mura effect of said display on parallel vertical lines on the display, and in a steady state condition of luminance, wherein the vertical lines are selected at L/4 horizontal distance from each other, wherein said number of points depends on the size of the display and a type of Mura effect to be evaluated,
- comparing the measured luminance with nominal values to obtain a standard deviation from the nominal values.

2. A method according to claim 1, wherein said step of comparing the measured luminance with nominal values to obtain a standard deviation from the nominal values comprises the following:
- the measured luminance values of said required number of points are introduced into a numerical code which returns a new set of data expressing said nominal values by fitting the points to a 4th degree polynomial;
- a difference is then calculated and used to find said standard deviation.

## Patentansprüche

1. Verfahren zur Bewertung des Mura-Effekt-Pegels, durch Messen des Luminanz-Pegels in einem Display, mit den folgenden Schritten,
- das Display wird beleuchtet oder angeschaltet und zur Erwärmung belassen;
- nach Ablauf einer ausreichenden Zeitspanne, wie es von den Display-Spezifikation vorgegeben wird, wird die Luminanz des Displays Punkt für Punkt gemessen;
- Bestimmen einer notwendigen, erforderlichen oder verlangten Anzahl von Punkten, um den Mura-Effekt des Displays zu bewerten oder einzuschätzen oder zur beurteilen, und zwar an oder für parallele vertikale Linien des oder am Display(s), und in einem stationären Zustand der Luminanz, wobei die vertikalen Linien so ausgewählt sind oder werden, dass sie bei oder mit einem L/4-Horizontal-Abstand voneinander liegen, und wobei die Anzahl der Punkte von der Größe des Displays und einem Typ oder einer Art des zu bewertenden Mura-Effekts abhängt;
- Vergleichen der gemessenen Luminanz mit Nenn- oder Nominalwerten, um eine Standard-Abweichung von den Nenn- oder Nominalwerten zu erhalten.

2. Verfahren nach Anspruch 1, wobei der Schritt des Vergleichens der gemessenen Luminanz mit Nenn- oder Nominalwerten, zum Erhalt einer Standardabweichung von diesen Nenn- oder Nominalwerten das Folgende beinhaltet...
- die gemessenen Luminanzwerte der erforderlichen Punktzahl werden in eine numerische Berechnung (Code) eingegeben, welche einen neuen Datenset oder einen neue Gruppe von Daten ausgibt oder zurückgibt, welche die Nenn- oder Nominalwerte durch Angleichen oder Einpassen der Punkte in ein Polynom vierter Ordnung ausdrückt;
- eine Differenz wird dann berechnet und verwendet, die Standardabweichung zu finden oder zu ermitteln.

## Revendications

1. Procédé d'évaluation du niveau de l'effet Mura par mesure du niveau de luminance dans un affichage, comprenant les étapes suivantes :
- l'affichage est éclairé et on le laisse chauffer,
- après écoulement d'un temps suffisant comme indiqué dans les spécifications de l'affichage, la luminance de l'affichage est mesurée point par point,
- détermination d'un nombre requis de points pour évaluer l'effet Mura dudit affichage sur des lignes verticales parallèles sur l'affichage, et dans un état stabilisé de luminance, dans lequel les lignes verticales sont choisies à une distance horizontale L/4 les unes des autres, dans lequel ledit nombre de points dépend de la taille de l'affichage et d'un type d'effet Mura devant être évalué,
- comparaison de la luminance mesurée à des valeurs nominales pour obtenir un écart standard par rapport aux valeurs nominales.

2. Procédé selon la revendication 1, dans lequel ladite étape de comparaison de la luminance mesurée aux valeurs nominales pour obtenir un écart standard par rapport aux valeurs nominales comprend les opérations suivantes :
- les valeurs de luminance mesurées dudit nombre requis de points sont introduites dans un code numérique qui renvoie un nouvel ensemble de données exprimant lesdites valeurs nominales en ajustant les points à une fonction polynomiale du 4^{ième} degré ;
- une différence est ensuite calculée et utilisée pour trouver ledit écart standard.
